# EUROPEAN PATENT SPECIFICATION

(11) **EP 1 554 094 B1**
(45) Date of publication and mention of the grant of the patent: **27.09.2006**
(21) Application number: 03793739.8
(22) Date of filing: 20.08.2003
(51) Int. Cl.: B27K 7/00

(54) **CHEMICALLY MODIFIED, NATURAL CORK AND ITS USE AS A SUPPORT IN REACTIONS ON SOLID PHASE**
CHEMISCH MODIFIZIERTER NATURKORK UND SEINE VERWENDUNG ALS TRÄGER BEI REAKTIONEN AN DER FESTPHASE
LIEGE NATUREL CHIMIQUEMENT MODIFIE ET SON UTILISATION COMME SUPPORT DANS DES REACTIONS SUR PHASE SOLIDE

(30) Priority: 06.09.2002 ES 200202035
(43) Date of publication of application: 20.07.2005
(73) Proprietor: Surochem S.L., 17001 Girona (ES)
(72) Inventor: BARDAJI RODRIGUEZ, Eduard, c/o Univ. de Girona, Campus Montilivi, s/n, 17071 Girona (ES); ALBESA GALTES, Gemma, c/o Univ. de Girona, Campus Montilivi, s/n, 17071 Girona (ES)
(74) Representative: SUGRANES - VERDONCES - FERREGÜELA
(86) International application number: PCT/EP2003/009211
(87) International publication number: WO 2004/022292

(56) References cited:
- WO-A-00/64649
- FR-A- 2 803 544
- US-A- 6 152 966

## Description

### Field of the invention

The present invention relates to a material derived from chemically modified, natural cork, which contains reactive groups, preferably amine groups anchored to its surface, and can be used as a solid support for its application both in industrial-type chemical processes on solid phase and in biotechnology.

### State of the prior art

The chemical structure of cork is very complex, its main components being natural polymers such as suberin, which is the main component (45%) and is found in the cellular walls forming alternate layers with waxes, and lignin (27%), which, with its reticulated structure, partially based on aromatic rings, gives rigidity to the cellular wall. Both polymers have functional groups, principally free or sterified carboxylic groups, as well as alcoholic and phenolic groups which are free, sterified or form part of ethers.

There are some descriptions in the prior art relating to different surface treatments which are performed on cork. Thus, the patent application EP-A-277603 discloses coating the cork surface with a silicon emulsion loaded with an inert substance (metal stearate or amorphous atomized silica gel).

Patent application EP-A-351503 discloses the bleaching of the cork surface using oxidation treatments (aqueous chlorine solutions or hydrogen peroxide), reduction treatments (derived from sulphur) or treatment with a silicon emulsion loaded with colouring or pigments.

Patent application EP-A-395010 discloses the deodorization of the cork using physico-chemical treatments: dry heating, treatment with citric acid, treatment with an oxidant bath of hydrogen peroxide, treatment with alcohol vapour, washing with hot water, extraction using Soxhlet with n-pentane, treatment with vapour.

Patent application EP-A-465830 discloses the plastification of the cork surface with a silicon emulsion which contains particles of a finely divided plastic substance.

Patent application EP-A-515806 discloses the bacteriological and physico-chemical protection of the cork surface by coating with two consecutive layers. The first layer consists of a mixture of glycerine and a cationic surfactant and the second layer consists of a silicon emulsion comprising an inert plastic substance.

Patent US5123981 discloses the coating of the cork surface with surfactants that can neutralize the carboxyl groups of said surface so that they can be used as a charge-pad in emulsions with explosive formulations.

These treatments provide a surface coating that neutralizes the active points of the cork surface, but do not provide chemical modifications which imply the introduction of reactive functional groups different from natural cork, for which reason they cannot be used for subsequent transformations.

The literature on organic synthesis on solid phase, e.g. in:
- "Solid supports and catalysts in Organic Synthesis", K. Smith (Ellis Horwood Ltd, 1992, ISBN: 0-13-639998-3) and
- "Organic synthesis on Solid Phase: Supports, Linkers, Reactions", F. Zaragoza (Wiley, John & Sons, 2000)
   discloses inorganic substrates such as silica, alumina, carbon, clays, zeolites and organic substrates such as polystyrene, polyvinylpyridine, collagen, agarose, amongst others.

The authors of the present invention do not know any disclosed supports for reactions on solid phase constituted by chemically modified, natural cork, at any time.

The authors of the present invention have discovered that it is possible to produce a new material, through the chemical modification of the surface of the natural cork, which can be used as a solid support to be applied both to industrial-type chemical processes on solid phase, as well as in biochemical processes on solid phase.

An advantage of this material is the easy access to the raw material which, furthermore, is of renewable origin, and its low density, which makes it a very light material. Other additional advantages are: the facility with which the support can be eliminated from the reaction medium in the industrial-type chemical processes on solid phase; the possibility of reusing said support, the possibility of introducing any additional functional group on the chemically modified, natural cork. All of this, together with its appreciable stability to chemical agents, makes the new material very suitable to be used in a great variety of processes and transformations on solid phase, both chemical and biochemical.

### Object of the Invention.

The object of the present invention is a new material consisting of natural cork, modified chemically so that it contains reactive groups anchored to its surface, preferably amine groups.

A second aspect of the invention also has as its object a process to produce chemically modified, natural cork containing reactive groups anchored to its surface, preferably amine groups, as well as the products obtained through said process.

A third aspect of the invention also has the object of the use of said chemically modified, natural cork as a support for chemical and biochemical reactions on solid phase.

### Description of the invention

The new material object of the invention is chemically modified, natural cork, characterized in that it has chemical groups or functional residues on its surface which respond to the following general formula )I): 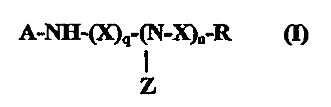 wherein:
A represents the surface of the natural cork;
X is a spacer group selected, independently from:
   - (CR¹R²)ₘ wherein m is a whole number which can have values from 1 to 12, and R¹ and R² can be either hydrogen or an alkyl group with 1 to 4 carbon atoms or a phenyl group or a hydroxymethyl group:
   - CO;
   - (CH₂CHR³O)ₚ(CHR₂CHR³O)_{p'}(CHR³CH₂O)_{p''}CH₂CHR³, wherein p, p' and p" can be, independently, a whole number between 0 and 500 and R³ can be, independently, hydrogen or methyl;
   - phenyl or a mononuclear aromatic ring, possibly substituted;
   - naphthyl or a polynuclear aromatic ring, possibly substituted;
   - 2-pyridyl or a heterocyclic ring;
   - cyclohexyl or a cycloaliphatic ring;
   - or combinations thereof;
   q is 0 or 1;
   n is a whole number between 0 and 3;
   Z is hydrogen or X-R; and
   R is a functional group selected from -H; -NHR⁴, where R⁴ can be hydrogen, aryl, arylamine or chloroacetyl; -OH; F; Cl; Br; I; hydroxymethyl; SO₃H; -COOR⁵, where R⁵ can be hydrogen or a cation of an alkaline or alkaline earth metal or an alkyl group with 1 to 4 carbon atoms; and PO₃H₂.

In the case of functional groups with asymmetric carbons, the scope of the invention includes both racemates and pure enantiomers and the mixtures of diastereoisomers.

Preferred are materials with chemical groups wherein the general formula (I) q is 1, Z is hydrogen and the substituent R is -NHR⁴, where R⁴ can be hydrogen, phenyl or naphthyl.

Particularly preferred are the materials wherein the chemical groups anchored to the surface of the natural cork that respond to the formulas:

A-NH-NHR⁴

A-NH-X-NHR⁴

A-NH-X-NH₂

A-NH-X-(NH-X)ₙ-NHR⁴

A-NH-X-(NH-X)-NH₂

A-NH-X-SO₃H

A-NH-X-COOR⁵

A-NH-X-H

wherein A, X, R⁴, R⁵ and n have the aforementioned meanings.

Particularly preferred are materials wherein X is an alkylene group, particularly ethyene.
The functional residue 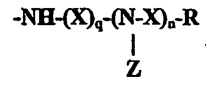 is linked by a covalent bond to the surface of the natural cork, through a chemical residue from the chemical groups belonging to the natural cork, e.g. carboxylic or hydroxylic groups.

The surface of the natural cork can contain variable proportions of functional residues anchored, being preferred those materials that contain between 0.01 millimoles and 10 millimoles of said functional residues per gram of support.

In a preferred embodiment of the present invention, the new material can also be in the form of a granulate of various sizes, but it can also be in the form of pieces of cork cut in different forms (disc, cylinder, rectangular prisms, etc).

The process to produce the new materials object of the invention is characterized in that it comprises the following stages:
(a) activation of the reactive groups of the natural cork using an acylating;, halogenating or sulphonylating agent, and
(b) reaction of the activated groups with a compound of general formula (ii) 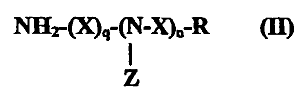
wherein X, q, n, Z and R have the aforementioned meanings.

The reactive groups of the natural cork are of carboxylic, alcoholic, phenolic type, etc. i.e. they have hydroxyl groups which can be substituted by acylating agents, such as e.g. acetyl chloride, halogenating agents e.g. thionyl chloride, or sulphonylating agents, e.g. methanesulphonyl chloride. The resulting products are activated and have greater reactivity in the substitution reactions, which permits performing the reaction with general formula (II) with very good results.

If the substituent R of the formula (II) compound also has a certain reactivity to the activated groups of the cork surface, they can be protected by the protection techniques of functional groups within the scope of the person skilled in the art, e.g. those described in the known book by Green T.V. and Wuts P.G.M. "Protective Group in Organic Synthesis" ED.3 John Wiley & Sons (1999), ISBN 0-471-16019-9.

Possibly, although preferably, before proceeding with the activation stage you can previously proceed with a prior stage of conditioning the natural material that can be initiated by washing with water to eliminate the heavy particles and retain only those particles that float. The cork washed in this way can be then treated with an alkaline pH aqueous solution (NaOH), carbonate, bicarbonate, etc.) and next, the material is washed successively with an acid pH solution (between 3 and 4) and water until reaching pH neutral. The product obtained can be dried directly using heat (oven, etc) or can be additionally washed with methyl or ethyl alcohol, ethyl acetate or other organic solvents. The product obtained in this way can be air dried and subsequently oven dried.

It can also be dried using anhydrization processes such as a Dean Stark at toluene reflux, through which the loss of 5±2 % in weight due to water elimination is observed, producing totally dry material.

The activation and reaction stages are carried our within inert solvents, well-known by the skilled person for this type of reactions, e.g. chlorinated solvents such as methylene chloride. Once the reaction has ended, the material is washed with an inert solvent, such as methylene chloride and is dried.

If R = -NH₂, the evaluation of the amine functions incorporated on the material can be carried out with picric acid (Gisin method), in the following way: The material is treated with a solution of picric acid in methanol and is washed successively with methanol and methylene chloride; the picrate of the support is then eluted with a treatment with triethylamine in methanol, the solution produced is flushed and is read on the spectrophotometer, discovering the picric content by comparing with a previous calibration line and from there, determining the content of amine groups per gram of support mmoles/g.

In a preferred embodiment of the present invention, the primary amine group located on the surface of the cork comes from a diamine-type reagent:

NH₂-X-(NH-X)ₙ-NH₂

with X and n having the aforementioned meaning. Examples of these diamines can be: ethylenediamine; 1,2-diaminopropane; 1,3-propanediamine; 1,4-butanediamine; 1,3-diaminopentane; 1,5-diaminopentane; 1,6-hexanediamine; 1,7-diaminoheptane; 1,8-diaminooctane; 1,9-diaminononane; 1,10-diaminodecane; 1,12-diaminododecane; 2,4-diaminobutyric acid; 1,5-diamino-2-methylpentane; 1,2-diamino-2-methylpropane; 1,6-diamino-2,2,4-trimethylhexane, urea; diamino polyethylene glycol 2000; diamino polyethylene glycol 3000; diamino polyethylene glycol 3400; diamino polyethylene glycol 6000; diamino polyethylene glycol 10000; diamino polyethylene glycol 20000; (polypropylene glycol-block-polyethylene glycol-block-polypropylene glycol) 600 bis (2-aminopropyl ether); (polypropylene glycol-block-polyethylene glycol-block-polypropylene glycol) 800 bis (2-aminopropyl ether); (polypropylene glycol-block-polyethylene glycol-block-polypropylene glycol) 1900 bis (2-aminopropyl ether); polypropylene glycol 130 bis(2-aminopropyl ether); polypropylene glycol 300 bis(2-aminopropyl ether): 1,2-diaminocyclohexane; 1,4-diaminocyclohexane; 2,4-diaminobenzene sulphonic acid; 2,5- diaminobenzene sulphonic acid; 3,5-diaminobenzene sulphonic acid; 3,4-diaminobenzophenone; 4,4'-diaminobenzophenone; 4,4'-diaminodiphenylmethane; 2,4-diaminophenol; 4,4'-diaminodiphenylsulphone; 2,3-diaminotoluene; 2,4-diaminotoluene; 2,6-diaminotoluene; 3,4-diaminotoluene; 2,5-diaminotoluene; 2,4-diamino-1,3,5-trimethylbenzene; 2,7-diaminofluorene; 1,8-diaminonaphthalene; diaminobiotin; 2,6-diamino-4-chloropyrimidine; 2,3-diaminopyridine; 2,6-diaminopyridine; 3,4-diaminopyridine; 3,5-diamino-1,2,4-triazole; 4'4"(5")-diaminobenzo-15-crown-5; N,N'-bis(2-aminoethyl)-1,3-propanediamine; bis-(6-aminohexyl)-amine; bis-(8-aminoactyl)-amine; tris-(2-aminoethyl)-amine.

The chemically modified, natural cork, object of the invention can be used as a solid support to be applied in chemical and biochemical processes based on reactions on solid phase.

In the reactive groups of the surface of the new material, one can anchor all types of molecules to be subsequently transformed, and develop applications based on the anchoring of sequestering, chelating, ligand co-ordination agents, catalysts, chiral molecules, etc. Furthermore, enzymes, antibodies and proteins, in a wide sense can also be anchored.

The various modalities of the material of the invention can be applied as support for synthesis processes on solid phase, scavengers (compounds that eliminated unwanted sub-products), descalers, anion exchange, cation exchange, metal recovery, bioreactors, catalysts, use of immobilized enzymes, use of immovibilized antibodies, immobilization of molecular sensors, immobilization of molecular probes, etc.

The chemically modified, natural cork object of the invention, if it has been functionalized with diamines, can also be used to produce agglomerated products, with excellent mechanical characteristics, when it undergoes copolymerization with polymerization agents such as isocyanates.

The following examples are given for the purposes of providing the person skilled in the art with a sufficiently clear, complete explanation of the present invention, but should not be considered as restrictive of the essential aspects of the object thereof, as they have been stated in the previous sections of this description.

### Examples

### Example 1: Preparation of CORK-NH-CH₂-CH₂-NH₂ (Formula I: q=1; n=0; X=CH₂-CH₂; R=NH₂)

50 g of granulated cork are treated with a 0.2N NaOH solution for 1 hour at room temperature. The product is filtered and then treated with acidulated water until reaching pH 3-4 at room temperature. It is then treated with water until neutralization of the medium (pH 6-7), it is filtered and dried at 100°C. Between 42 and 46 g of the support is produced which shows a negative reaction to the ninhydrin reagent. The support obtained is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ and 1,2 diaminoethane (1 mol) is added. It is left to react for 2 hours at room temperature. After this time, it is filtered and washed successively with CH₂Cl₂, ethanol, water, aqueous acid solution, water and ethanol, it is filtered and the product is dried at 100°C. The product produced shows a functionalization between 0.2 and 0.5 mmol of amine groups/ gram support.

### Example 2 Application as scavenger in acrylation reactions. Production of N-benzylbenzamide

0.1 g of benzylamine is treated with 0.35 g of benzoyl chloride and 0.28 g of triethylamine at reflux in 100 ml of CH₂Cl₂ until all the benzylamine is consumed. The reaction which forms N-benzylbenzamide is followed by chromatography (TLC or HPLC), detecting the formation of the product and the presence of an excess of unreacted benzoyl chloride. At this point, the solution is treated with 2 g of cork support produced in example 1 (0.4 mmol/g of NH₂ groups), and it is stirred until the benzoyl chloride is totally eliminated from the medium, it is filtered and evaporated, producing the pure N-benzylbenzamide with a yield of 95-98%.

### Example 3: Application as a scavenger in sulphonation reactions. Production of N-benzyl-p-toluenesulphonylamide

0.1g of benzylamine is treated with 0.47 g of p-toluenesulphonyl chloride and 0.28 g of triethylamine at reflux in 100 ml of CH₂Cl₂ until all the benzylamine is consumed. The reaction is followed by chromatography (TLC or HPLC), detecting the formation of the product and the presence of an excess of unreacted p-toluenesulphonyl chloride. At this point, the solution is treated with 2.5 g of cork support produced in example 1 (0.4 mmol/g of NH₂ groups), and it is stirred until the p-toluenesulphonyl chloride is totally eliminated from the medium, it is filtered and evaporated, producing the pure N-benzyl-p-toluenesulphonylamide with a yield of 92-96%.

### Example 4 Application in the immobilization of enzymes. Immobilization of papain and application to hydrolysis of a specific substrate (N-benzoylarginine ethyl ester BAEE)

Take 50 g of modified support according to example 1 (0.4 mmol NH₂ groups/gram support), which is treated with 1 litre of pH=5.75 0.05M PBS buffer (PBS = Phosphate Buffered Saline, buffer solution of monosodium phosphate and sodium chloride). Add glutaraldehyde (3 equivalents) and papain (0.1 equivalents). The mixture is stirred in a rotary reactor for 3 hours. It is then filtered and washed with ph=5.75 0.05M PBS. A support containing immobilized papain (SS-PAP1) is produced.

Alternatively, the papain can be immobilized in the following way:

Take 50 g of modified support according to example 1 (0.4 mmol NH₂ groups/gram support), which is treated with 1 litre of pH=5.75 0.05M PBS buffer, add water-soluble carbodiimide (WSC or N'-(dimethylaminepropyl-N-ethyl carbodiimide (3 equivalents) and papain (10 g) The mixture is stirred in a rotary reactor for 3 hours. It is then filtered and washed with pH=5.75 0.05M PBS. A support containing immobilized papain (SS-PAP2) is produced.

The activity of the SS-PAP1 and SS-PAP2 supports is revealed when the BAEE is hydrolyzed in the following manner:

Take 1 g of either SS-PAP1 or SS-PAP2 and treat with a 2mM EDTA solution in pH=8 0.05 M PBS buffer to which 3 ml of a 5 mM cysteine solution is added in pH=8 0.05M PBS buffer. The mixture is stirred at 37°C in a rotary reactor for 30 minutes. Next, add 2.5 ml of 0.021 M BAEE solution in pH=8 0.05 M PBS buffer and follow the course of the BAEE hydrolysis by HPLC. The BAEE hydrolysis is complete after 45 minutes.

### Example 5: Application in synthesis on solid phase. Synthesis of a tripeptide.

0.5 g of modified cork support, produced in example 1 (0.04 mmol NH₂ groups/ gram support) are treated with a mixture than contains 1.6 mmoles of PAL linker (5-(4-(9-fluorenyl methyloxycarbonyl)-aminomethyl-3,5-dimethoxy) valeric acid) 1.6 mmoles HOBt (1-hydroxybenzotriazol) and 1.6 mmoles DIC (di-isopropyl carbodiimide) for 3 hours at room temperature in (3ml) of DMF-CH₂Cl₂ (1:1 in volume). Next, the support is washed with 3x5 ml of DMF and 3x5 ml of CH₂Cl₂ successively, and then it is stirred with 5 ml of a mixture of acetic-pyridine anhydride- CH₂Cl₂ (1:1:4 in volume) for 5 minutes. It is washed with 3x5 ml CH₂Cl₂ successively, and the Fmoc protective group is eliminated by treatment with 5 ml of piperidine-DMF (2:8 in volume) for 15 minutes. The support is washed with 3x5 ml of DMF and 3 x 5 ml of CH₂Cl₂ successively, and the corresponding amino acids (Phe, Gly and Val) are successively coupled, protected with the Fmoc groups using 1.6 mmoles of Fmoc -amino acid, 1.6 mmoles of DIC and 1.6 mmoles of HOBt in a mixture of DMF- CH₂Cl₂ 1:1 in volume) at room temperature. The reaction time for each amino acid is 3 hours. After each coupling, it has been correspondingly washed with 3x5 ml of DMF and 3x5 ml of CH₂Cl₂. to unprotect the Fmoc group by treatment with 4 ml of piperidine-DMF (2:8 in volume) for 15 minutes at room temperature, to be subsequently washed with 3x5 ml of DMF and 3x5 ml of CH₂Cl₂. The un-anchoring of the peptide from the support has been carried out by treatment at room temperature with a mixture of TFA-DMF-CH₂Cl₂ (7:1:1 in volume), applying 3 ml for 5 mins, 3 ml for 20 mins and 3 ml for 2 h. All the extracts from the un-anchoring have been united, vacuum evaporated and dissolved in 20 ml TFA:water (1:49 in volume). This aqueous solution has been washed with successive extraction with 5 ml of diethyl ether, 5 ml of ethyl acetate and 5 ml of diethyl ether. The aqueous phase has been frozen and lyophilized. The product produced corresponds to the H-Phe-Gly-Val-NH₂ tripeptide, showing a purity greater than 70% by HPLC analysis and a correct mass spectrum (320, M+H) by ESI-MS (Electro Spray Ionization-Mass Spectrometry).

### Example 6 Preparation of CORK-NH-CH₂-CH₂-CH₂-CH₂-CH₂-CH₂-NH₂ (Formula I: q =1; n = 0; X = (CH₂)₆; R =NCH₂)

50 g of granulated cork are treated with a 0.2N NaOH solution for 1 hour at room temperature. The product is filtered and is then treated with acidulated water until reaching pH 3-4 at room temperature. It is then treated with water until neutralization of the medium (pH 6-7), filtered and dried at 100°C. Between 42 and 46 g of the support is produced which shows a negative reaction to the ninhydrin reagent. The support produced is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ and 1,6 diaminohexane (1 mol) is added. It is left to react for 2 hours at room temperature. After this time, it is filtered and washed successively with CH₂Cl₂, ethanol, water, diluted aqueous acid solution and water, it is filtered and the product is dried at 100°C. The product produced shows a functionalization between 0.4 and 0.65 mmol of amine groups/ gram support.

### Example 7 Preparation of CORK-NH[(CH₃)CHCH₂O]ₚ(CH₂CH₂O)ₚ [(CH₃)CHCH₂O]_{p"}CH₂CHCH₃NH₂ (Formula I: q = 1; n = 0; X = [(CH₃)CHCH₂O]ₚ (CH₂CH₂O)_{p'}[(CH₃)CHCH₂O]_{p"}CH₂CHCH_{3;} R = NH₂)

50 g of granulated cork are treated with a 0.2N NaOH solution for 1 hour at room temperature. The product is filtered and is then treated with acidulated water until reaching pH 3-4 at room temperature. It is then treated with water until neutralization of the medium (pH 6-7), it is filtered and dried at 100°C. Between 42 and 46 g of the support is produced which shows a negative reaction to the ninhydrin reagent. The support produced is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ and (polypropylene glycol)-block(polyethylene glycol)-block-(polipropylene glycol) bis (2-aminopropyl ether) approximate molecular weight = 600) (320 ml) is added. It is left to react for 10 hours at room temperature. After this time, it is filtered and washed successively with CH₂Cl₂, ethanol, water, aqueous acid solution and water, it is filtered and the product is dried at 100°C. The product produced shows a functionalization between 0.1 and 0.4 mmol of amine groups/ gram support.

### Example 8 Preparation of CORK-NH-(CH₂)₆-NH-(CH₂)₆-NH₂ (Formula I: q = 1; n = 1; X = (CH₂)₆; Z = H; R = NH₂)

50 g of granulated cork are treated with a 0.2N NaOH solution for 1 hour at room temperature. The product is filtered and is then treated with acidulated water until reaching pH 3-4 at room temperature. It is then treated with water until neutralization of the medium (pH 6-7), it is filtered and dried at 100°C. Between 42 and 46 g of the support is produced which shows a negative reaction to the ninhydrin reagent. The support produced is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ and bis-(6-aminohexyl)-amine (1.5 mol) is added. It is left to react for 3 hours at room temperature. After this time, it is filtered and washed successively with CH₂Cl₂, ethanol, water, aqueous acid solution and water, it is filtered and the product is dried at 100°C. The product produced shows a functionalization between 0.3 and 0.5 mmol of amine groups/ gram support.

### Example 9 Preparation of CORK-NH-(CH₂)₃-NH₂ (Formula I: q =1; n = 0; X = -(CH₂)₃; R = NH₂)

50 g of granulated cork are treated with a 0.2N NaOH solution for 1 hour at room temperature. The product is filtered and is then treated with acidulated water until reaching pH 3-4 at room temperature. It is then treated with water until neutralization of the medium (pH 6-7), it is filtered and dried at 100°C. Between 42 and 46 g of the support is produced which shows a negative reaction to the ninhydrin reagent. The support produced is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ and 1,3-diaminopropane (1 mol) is added. It is left to react for 3 hours at room temperature. After this time it is filtered and washed successively with CH₂Cl₂, ethanol, water, aqueous acid solution and water, it is filtered and the product is dried at 100°C. The product produced shows a functionalization between 0.2 and 0.5 mmol of amine groups/ gram support.

### Example 10 Preparation of CORK-NH-(CH₂)₂-SO₃H (Formula I: q =1; n = 0; X = (CH₂)₂; R = SO₃H)

50 g of granulated cork are treated with a 0.2N NaOH solution for 1 hour at room temperature. The product is filtered and is then treated with acidulated water until reaching pH 3-4 at room temperature. It is then treated with water until neutralization of the medium (pH 6-7), it is filtered and dried at 100°C. Between 42 and 46 g of the support is produced which shows a negative reaction to the ninhydrin reagent. The support produced is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ pyridine (3:1) and taurine (2.3 mol) is added. It is left to react for 9 hours at room temperature. After this time, it is filtered and washed successively with CH₂Cl₂, ethanol, water, aqueous acid solution and water, it is filtered and the product is dried at 100°C. A support with acid properties which shows a negative reaction to the ninhydrin test is produced.

### Example 11 Preparation of CORK-NH-CH₂-COOEt (Formula I: q =1; n = 0; X = CH₂; R = COOEt)

50 g of granulated cork are treated with a 0.2N NaOH solution for 1 hour at room temperature. The product is filtered and is then treated with acidulated water until reaching pH 3-4 at room temperature. It is then treated with water until neutralization of the medium (pH 6-7), it is filtered and dried at 100°C. Between 42 and 46 g of the support is produced which shows a negative reaction to the ninhydrin reagent. The support produced is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ pyridine (3:1) and glycine ethyl ester hydrochloride (1.7 mol) is added. It is left to react for 3 hours at room temperature. After this time, it is filtered and washed successively with CH₂Cl₂, ethanol, water, aqueous acid solution and water, it is filtered and the product is dried at 100°C. The support produced shown a negative reaction to the ninhydrin test.

### Example 12 Preparation of CORK-NH-CH₂-CH₂NH-(1-naphthyl) (Formula I: q = 1; n = 0; X = (CH₂)₂; R = NH-(1-naphthyl))

50 g of granulated cork are treated with a 0.2N NaOH solution for 1 hour at room temperature. The product is filtered and is then treated with acidulated water until reaching pH 3-4 at room temperature. It is then treated with water until neutralization of the medium (pH 6-7), it is filtered and dried at 100°C. Between 42 and 46 g of the support is produced which shows a negative reaction to the ninhydrin reagent. The support produced is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ and N-(1-naphthyl)ethyldiamine (1 mol) is added. It is left to react for 8 hours at room temperature. After this time, it is filtered and washed successively with CH₂Cl₂, ethanol, water, aqueous acid solution and water, it is filtered and the product is dried at 100°C. The support produced shown a negative reaction to the ninhydrin test.

### Example 13 Preparation of CORK-NH- NH-phenyl (Formula I: q = 1; n = 0; R = NH-phenyl)

50 g of granulated cork are treated with a 0.2N NaOH solution for 1 hour at room temperature. The product is filtered and is then treated with acidulated water until reaching pH 3-4 at room temperature. It is then treated with water until neutralization of the medium (pH 6-7), it is filtered and dried at 100°C. Between 42 and 46 g of the support is produced which shows a negative reaction to the ninhydrin reagent. The support produced is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ and phenylhydrazine (0.9 mol) is added. It is left to react for 6 hours at room temperature. After this time, it is filtered and washed successively with CH₂Cl₂, ethanol, water, aqueous acid solution and water, it is filtered and the product is dried at 100°C. The support produced shown a negative reaction to the ninhydrin test.

### Example 14 Preparation of CORK-NH-NH-(1-phenyl-ethyl) (Formula 1: q = 1; n = 0; X = CR₁R₂, R₁ = methyl, R₂ = phenyl; R = H)

50 g of granulated cork are treated with a 0.2N NaOH solution for 1 hour at room temperature. The product is filtered and is then treated with acidulated water until reaching pH 3-4 at room temperature. It is then treated with water until neutralization of the medium (pH 6-7), it is filtered and dried at 100°C. Between 42 and 46 g of the support is produced which shows a negative reaction to the ninhydrin reagent. The support produced is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ and 1-phenylethylamine (1 mol) is added. It is left to react for 6 hours at room temperature. After this time, it is filtered and washed successively with CH₂Cl₂, ethanol, water, aqueous acid solution and water, it is filtered and the product is dried at 100°C. The support produced shown a negative reaction to the ninhydrin test.

### Example 15 Preparation of CORK-NH-((S)-1-phenyl-ethyl) (Formula I: q = 1; n = 0; X = CR₁R₂, R₁ = methyl, R₂ = phenyl; R = H)

50 g of granulated cork are treated with a 0.2N NaOH solution for 1 hour at room temperature. The product is filtered and is then treated with acidulated water until reaching pH 3-4 at room temperature. It is then treated with water until neutralization of the medium (pH 6-7), it is filtered and dried at 100°C. Between 42 and 46 g of the support is produced which shows a negative reaction to the ninhydrin reagent. The support produced is then modified by treating it with a methanesulphonyl chloride solution (0.5 moles) in 1 litre of CH₂Cl₂:pyridine (4:1) for 30 minutes at room temperature, it is filtered and then 1 litre of CH₂Cl₂ and S(-)-1-phenylethylamine (1.05 mol) is added. It is left to react for 9 hours at room temperature. After this time it is filtered and washed successively with CH₂Cl₂, ethanol, water, aqueous acid solution and water, it is filtered and the product is dried at 100°C. The support produced shown a negative reaction to the ninhydrin test.

### Example 16 Application for the preparation of CORK-NH-CH₂-CH₂-NH-COCH₂Cl) (Formula I: q = 1; n = 0; X = CH₂-CH₂; R = NHCOCH₂Cl)

Treat 50 g of granulated cork, obtained in example 1 (0.4 mmol NH₂ groups/gram support), with a chloroacetic anhydride solution (0.2 moles) in dichloromethane for 2 hours. The support is then filtered, and washed successively 3 times with dichloromethane, ethanol, water, ethanol and dichloromethane. The product is dried producing a support containing 0.25 mmoles of Cl function per gram of support. The evaluation of the functionalization is performed by quantitative gravimetric analysis with silver nitrate.

### Example 17 Formation of agglomerates

1 g of modified cork support, according to example 1, is introduced in a mould and 0.5 ml of phenyl di-isocyanate is added. The material is mixed, placed in a mould, compressed using a plunger and heated. A piece of cork agglomerate is obtained. The reaction has also been carried out at room temperature.

## Claims

1. Chemically modified, natural cork, **characterized in** there are chemical groups or functional residues on its surface which respond to the following general formula (I): 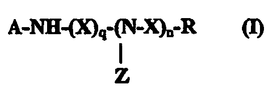 wherein
A represents the surface of the natural cork;
X is a spacer group selected, independently from:
- (CR¹R²)ₘ wherein m is a whole number which can have values from 1 to 12, and R¹ and R² can be either hydrogen or an alkyl group with 1 to 4 carbon atoms or a phenyl group or a hydroxymethyl group:
- -CO;
- (CH₂CHR³O)ₚ(CHR²CH₃P)_{p'}(CHR³CH₂O)ₚ-CH₂CHR³, wherein p, p' and p" can be, independently a whole number between 0 and 500 and R³ can be, independently, hydrogen or methyl;
- phenyl or a mononuclear aromatic ring, possibly substituted;
- naphthyl or a polynuclear aromatic ring, possibly substituted;
- 2-pyridyl or a heterocyclic ring;
- cyclohexyl or a cycloaliphatic ring;
- or combinations thereof;
q is 0 or 1;
n is a whole number between 0 and 3;
Z is hydrogen or X-R; and
R is a functional group selected from -H; -NHR⁴, where R⁴ can be hydrogen, aryl, arylamine or chloroacetyl; -OH; F; Cl; Br; I; hydroxymethyl; SO₃H; -COOR⁵, where
R⁵ can be hydrogen or a cation of an alkaline earth metal or an alkyl group with 1 to 4 carbon atoms; and PO₃H₂.

2. Chemically modified, natural cork according to claim 1, **characterized in that** R is -NH₂.

3. Chemically modified, natural cork according to claim 2, **characterized in that** the surface chemical groups respond to the formula:

4. Chemically modified, natural cork according to claim 3, **characterized in that** X is an alkylene group, particularly ethylene.

5. Chemically modified, natural cork according to claim 3, **characterized in that** X is an alkylene group, particularly propylene.

6. Chemically modified, natural cork according to claim 3, **characterized in that** X is an alkylene group, particularly hexamethylene.

7. Chemically modified, natural cork according to claim 3, **characterized in that** X is an alkylene oxide block copolymer, particularly a copolymer (polipropylene glycol) - block-(polyethylene glycol)-block-(polypropylene glycol).

8. Chemically modified, natural cork according to claim 2, **characterized in that** the surface chemical groups respond to the formula:
A-NH-X-(NH-X)-NH₂
wherein A and X have the aforementioned meanings.

9. Chemically modified, natural cork according to claim 8, **characterized in that** X is an alkylene group, particularly hexamethylene.

10. Chemically modified, natural cork according to claim 1, **characterized in that** R is -SO₃H.

11. Chemically modified, natural cork according to claim 10, **characterized in that** the surface chemical groups respond to the formula:
A-NH-X-SO₃H
wherein A and X have the aforementioned meanings
A-NH-X-NH₂
wherein A and X have the aforementioned meanings.

12. Chemically modified, natural cork according to claim 11, **characterized in that** X is an alkylene group, particularly ethylene.

13. Chemically modified, natural cork according to claim 1, **characterized in that** R is -COOEt.

14. Chemically modified, natural cork according to claim 13, **characterized in that** the surface chemical groups respond to the formula:
A-NH-X-COOEt
wherein A and X have the aforementioned meanings.

15. Chemically modified, natural cork according to claim 14, **characterized in that** X is an alkylene group, particularly methylene.

16. Chemically modified, natural cork according to claim 1, **characterized in that** R is -NHR⁴.

17. Chemically modified, natural cork according to claim 16, **characterized in that** the surface chemical groups respond to the formula:
A-NH-X- NHR⁴
wherein A, X and R⁴and have the aforementioned meanings.

18. Chemically modified, natural cork according to claim 17, **characterized in that** X is an alkylene group, particularly ethylene and R⁴ an aryl group, particularly 1-naphthyl.

19. Chemically modified, natural cork according to claim 17, **characterized in that** X is an alkylene group, particularly ethylene and R⁴ a chloroacetyl group

20. Chemically modified, natural cork according to claim 16, **characterized in that** the surface chemical groups respond to the formula:
A-NH-NHR⁴
wherein A and R⁴and have the aforementioned meanings.

21. Chemically modified, natural cork according to claim 20, **characterized in that** R⁴ is an aryl group, particularly phenyl.

22. Chemically modified, natural cork according to claim 1, **characterized in that** R is -H.

23. Chemically modified, natural cork according to claim 22 **characterized in that** the surface chemical groups respond to the formula:
A-NH-X-H
wherein A and X have the aforementioned meanings.

24. Chemically modified, natural cork according to claim 23, **characterized in that** X is an alkyl group, particularly 1-phenylethyl.

25. Chemically modified, natural cork according to claims 1 to 24, **characterized in that** it contains between 0.01 millimoles and 10 millimoles of functional residues per gram of support.

26. A process to obtain chemically modified, natural cork, object of claims 1 to 25 **characterized in that** it comprises the following stages:
(a) activation of the reactive groups of the natural cork using an acylating;, halogenating or sulphonylating agent, and
(b) reaction of the activated groups with a compound of general formula (II) 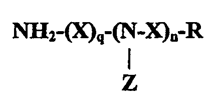 wherein X, q, n, Z and R have the aforementioned meanings.

27. A process according to claim 26, **characterized in that** the acylating agent is acetyl chloride, the halogenating agent is thionyl chloride, and the sulphonylating agent is methanesulphonyl chloride.

28. A process according to claims 26 or 27, **characterized in that**, before proceeding with the activation stage, a prior stage to condition the material by alkaline, acid and neutral pH aqueous washes are carried out.

29. Chemically modified, natural cork which can be produced by the process object of claims 26 to 28.

30. The use of the chemically modified natural cork, according to claims 1 to 25 and 29 as a support for chemical and biochemical reactions on solid phase.

## Patentansprüche

1. Chemisch modifizierter, natürlicher Kork, **dadurch gekennzeichnet, dass** es chemische Gruppen oder funktionelle Reste an dessen Oberfläche gibt, die der folgenden allgemeinen Formel (I) entsprechen: 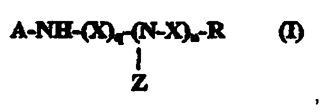 in welcher
A für die Oberfläche des natürlichen Korks steht;
X eine Abstandshaltergruppe, unabhängig ausgewählt aus:
- (CR¹R²)ₘ, wobei m eine ganze Zahl, die Werte von 1 bis 12 haben kann, ist und R¹ und R² entweder Wasserstoff oder eine Alkylgruppe mit 1 bis 4 Kohlenstoffatomen oder eine Phenylgruppe oder eine Hydroxymethylgruppe sein können;
- -CO;
- (CH₂CHR³O)ₚ(CHR²CH₃P)_{p'}(CHR³CH2O)_{p"}CH₂CHR³, worin p, p' und p" unabhängig eine ganze Zahl zwischen 0 und 500 sein können und R³ unabhängig Wasserstoff oder Methyl sein kann;
- Phenyl oder einem monocyclischen aromatischen Ring, der möglicherweise substituiert ist;
- Naphthyl oder einem polycyclischen aromatischen Ring, der möglicherweise substituiert ist;
- 2-Pyridyl oder einem heterocyclischen Ring;
- Cyclohexyl oder einem cycloaliphatischen Ring;
- oder Kombinationen davon, ist;
q 0 oder 1 ist;
n eine ganze Zahl zwischen 0 und 3 ist;
Z Wasserstoff oder X-R ist; und
R eine funktionelle Gruppe, ausgewählt aus -H; -NHR⁴, wobei R⁴ Wasserstoff, Aryl, Arylamin oder Chloracetyl sein kann; -OH; F; Cl; Br; I; Hydroxymethyl; SO₃H; -COOR⁵, wobei R⁵ Wasserstoff oder ein Kation eines Erdalkalimetalls oder eine Alkylgruppe mit 1 bis 4 Kohlenstoffatomen sein kann; und PO₃H₂, ist.

2. Chemisch modifizierter, natürlicher Kork nach Anspruch 1, **dadurch gekennzeichnet, dass** R -NH₂ ist.

3. Chemisch modifizierter, natürlicher Kork nach Anspruch 2, **dadurch gekennzeichnet, dass** die an der Oberfläche befindlichen chemischen Gruppen der folgenden Formel entsprechen:
A-NH-X-NH₂,
worin A und X die vorerwähnten Bedeutungen haben.

4. Chemisch modifizierter, natürlicher Kork nach Anspruch 3, **dadurch gekennzeichnet, dass** X eine Alkylengruppe, insbesondere Ethylen, ist.

5. Chemisch modifizierter, natürlicher Kork nach Anspruch 3, **dadurch gekennzeichnet, dass** X eine Alkylengruppe, insbesondere Propylen, ist.

6. Chemisch modifizierter, natürlicher Kork nach Anspruch 3, **dadurch gekennzeichnet, dass** X eine Alkylengruppe, insbesondere Hexamethylen, ist.

7. Chemisch modifizierter, natürlicher Kork nach Anspruch 3, **dadurch gekennzeichnet, dass** X ein Alkylenoxid-Block-Copolymer, insbesondere ein (Polypropylenglycol)-Block-(Polyethylenglycol)-Block-(Polypropylenglycol)-Copolymer ist.

8. Chemisch modifizierter, natürlicher Kork nach Anspruch 2, **dadurch gekennzeichnet, dass** die an der Oberfläche befindlichen chemischen Gruppen der folgenden Formel entsprechen:
A-NH-X-(NH-X)-NH₂,
worin A und X die vorerwähnten Bedeutungen haben.

9. Chemisch modifizierter, natürlicher Kork nach Anspruch 8, **dadurch gekennzeichnet, dass** X eine Alkylengruppe, insbesondere Hexamethylen, ist.

10. Chemisch modifizierter, natürlicher Kork nach Anspruch 1, **dadurch gekennzeichnet, dass** R -SO₃H ist.

11. Chemisch modifizierter, natürlicher Kork nach Anspruch 10, **dadurch gekennzeichnet, dass** die an der Oberfläche befindlichen chemischen Gruppen der folgenden Formel entsprechen:
A-NH-X-SO₃H,
worin A und X die vorerwähnten Bedeutungen haben.

12. Chemisch modifizierter, natürlicher Kork nach Anspruch 11, **dadurch gekennzeichnet, dass** X eine Alkylengruppe, insbesondere Ethylen, ist.

13. Chemisch modifizierter, natürlicher Kork nach Anspruch 1, **dadurch gekennzeichnet, dass** R -COOEt ist.

14. Chemisch modifizierter, natürlicher Kork nach Anspruch 13, **dadurch gekennzeichnet, dass** die an der Oberfläche befindlichen chemischen Gruppen der folgenden Formel entsprechen:
A-NH-X-COOEt,
worin A und X die vorerwähnten Bedeutungen haben.

15. Chemisch modifizierter, natürlicher Kork nach Anspruch 14, **dadurch gekennzeichnet, dass** X eine Alkylengruppe, insbesondere Methylen, ist.

16. Chemisch modifizierter, natürlicher Kork nach Anspruch 1, **dadurch gekennzeichnet, dass** R -NHR⁴ ist.

17. Chemisch modifizierter, natürlicher Kork nach Anspruch 16, **dadurch gekennzeichnet, dass** die an der Oberfläche befindlichen chemischen Gruppen der folgenden Formel entsprechen:
A-NH-X-NHR⁴,
worin A, X und R⁴ die vorerwähnten Bedeutungen haben.

18. Chemisch modifizierter, natürlicher Kork nach Anspruch 17, **dadurch gekennzeichnet, dass** X eine Alkylengruppe, insbesondere Ethylen, und R⁴ eine Arylgruppe, insbesondere 1-Naphthyl, ist.

19. Chemisch modifizierter, natürlicher Kork nach Anspruch 17, **dadurch gekennzeichnet, dass** X eine Alkylengruppe, insbesondere Ethylen, und R⁴ eine Chloracetylgruppe ist.

20. Chemisch modifizierter, natürlicher Kork nach Anspruch 16, **dadurch gekennzeichnet, dass** die an der Oberfläche befindlichen chemischen Gruppen der folgenden Formel entsprechen:
A-NH-NHR⁴,
worin A und R⁴ die vorerwähnten Bedeutungen haben.

21. Chemisch modifizierter, natürlicher Kork nach Anspruch 20, **dadurch gekennzeichnet, dass** R⁴ eine Arylgruppe, insbesondere Phenyl, ist.

22. Chemisch modifizierter, natürlicher Kork nach Anspruch 1, **dadurch gekennzeichnet, dass** R -H ist.

23. Chemisch modifizierter, natürlicher Kork nach Anspruch 22, **dadurch gekennzeichnet, dass** die an der Oberfläche befindlichen chemischen Gruppen der folgenden Formel entsprechen:
A-NH-X-H,
worin A und X die vorerwähnten Bedeutungen haben.

24. Chemisch modifizierter, natürlicher Kork nach Anspruch 23, **dadurch gekennzeichnet, dass** X eine Alkylgruppe, insbesondere 1-Phenylethyl, ist.

25. Chemisch modifizierter, natürlicher Kork nach den Ansprüchen 1 bis 24, **dadurch gekennzeichnet, dass** er zwischen 0,01 Millimol und 10 Millimole funktionelle Reste pro Gramm Träger enthält.

26. Verfahren zur Herstellung von chemisch modifiziertem, natürlichem Kork, welcher der Gegenstand der Ansprüche 1 bis 25 ist, **dadurch gekennzeichnet, dass** es die folgenden Schritte umfasst:
(a) Aktivierung der reaktiven Gruppen des natürlichen Korks unter Verwendung eines Acylierungs-, Halogenierungs- oder Sulfonylierungsmittels und
(b) Umsetzung der aktivierten Gruppen mit einer Verbindung der allgemeinen Formel (II) 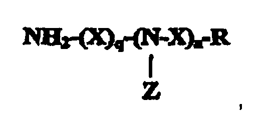 in welcher X, q, n, Z und R die vorerwähnten Bedeutungen haben.

27. Verfahren nach Anspruch 26, **dadurch gekennzeichnet, dass** das Acylierungsmittel Acetylchlorid ist, das Halogenierungsmittel Thionylchlorid ist und das Sulfonylierungsmittel Methansulfonylchlorid ist.

28. Verfahren nach den Ansprüchen 26 oder 27, **dadurch gekennzeichnet, dass** vor dem Vornehmen des Aktivierungsschritts ein früher stattfindender Schritt zur Konditionierung des Materials durch wässrige Wäschen bei alkalischem, saurem und neutralem pH ausgeführt wird.

29. Chemisch modifizierter, natürlicher Kork, der durch das Verfahren, welches der Gegenstand der Ansprüche 26 bis 28 ist, hergestellt werden kann.

30. Verwendung des chemisch modifizierten, natürlichen Korks nach den Ansprüchen 1 bis 25 und 29 als Träger für chemische und biochemische Reaktionen an fester Phase.

## Revendications

1. Liège naturel chimiquement modifié, **caractérisé en ce qu'**il y a des groupes chimiques ou des résidus fonctionnels sur sa surface qui répondent à la formule générale (I) suivante : 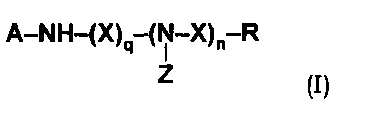 dans laquelle
A représente la surface du liège naturel ;
X est un groupe écarteur indépendamment choisi parmi :
- (CR¹R²)ₘ où m est un nombre entier qui peut avoir des valeurs de 1 à 12, et R¹ et R² peuvent être l'hydrogène ou un groupe alkyle ayant de 1 à 4 atomes de carbone ou un groupe phényle ou un groupe hydroxyméthyle ;
- -CO ;
- (CH₂CHR³O)ₚ(CHR²CH₃P)_{p'}(CHR³CH₂O)_{p"}-CH₂CHR³, où p, p' et p" peuvent être indépendamment un nombre entier compris entre 0 et 500 et R³ peut être indépendamment l'hydrogène ou le radical méthyle ;
- un cycle phényle ou aromatique mononucléaire, éventuellement substitué ;
- un cycle naphtyle ou aromatique polynucléaire, éventuellement substitué ;
- un cycle 2-pyridyle ou hétérocyclique ;
- un cycle cyclohexyle ou cycloaliphatique ;
- ou leurs combinaisons ;
q vaut 0 ou 1 ;
n est un nombre entier compris entre 0 et 3 ;
Z est l'hydrogène ou X-R ; et
R est un groupe fonctionnel choisi parmi -H ; -NHR⁴ où R⁴ peut être l'hydrogène, un aryle, arylamine ou chloroacétyle ; -OH ; F ; Cl ; Br ; I; hydroxyméthyle ; SO₃H; -COOR⁵ où R⁵ peut être l'hydrogène ou un cation d'un métal alcalino-terreux ou d'un groupe alkyle ayant de 1 à 4 atomes de carbone ; et PO₃H₂.

2. Liège naturel chimiquement modifié selon la revendication 1, **caractérisé en ce que** R est -NH₂.

3. Liège naturel chimiquement modifié selon la revendication 2, **caractérisé en ce que** les groupes chimiques de surface répondent à la formule :
A-NH-X-NH₂
dans laquelle A et X ont les significations susmentionnées.

4. Liège naturel chimiquement modifié selon la revendication 3, **caractérisé en ce que** X est un groupe alkylène, en particulier éthylène.

5. Liège naturel chimiquement modifié selon la revendication 3, **caractérisé en ce que** X est un groupe alkylène, en particulier propylène.

6. Liège naturel chimiquement modifié selon la revendication 3, **caractérisé en ce que** X est un groupe alkylène, en particulier hexaméthylène.

7. Liège naturel chimiquement modifié selon la revendication 3, **caractérisé en ce que** X est un copolymère séquencé d'oxyde d'alkylène, en particulier un copolymère de (polypropylèneglycol)-séquence-(polyéthylèneglycol)-séquence-(polypropylèneglycol).

8. Liège naturel chimiquement modifié selon la revendication 2, **caractérisé en ce que** les groupes chimiques de surface répondent à la formule :
A-NH-X-(NH-X)-NH₂
dans laquelle A et X ont les significations susmentionnées.

9. Liège naturel chimiquement modifié selon la revendication 8, **caractérisé en ce que** X est un groupe alkylène, en particulier hexaméthylène.

10. Liège naturel chimiquement modifié selon la revendication 1, **caractérisé en ce que** R est -SO₃H.

11. Liège naturel chimiquement modifié selon la revendication 10, **caractérisé en ce que** les groupes chimiques de surface répondent à la formule :
A-NH-X-SO₃H
dans laquelle A et X ont les significations susmentionnées.

12. Liège naturel chimiquement modifié selon la revendication 11, **caractérisé en ce que** X est un groupe alkylène, en particulier éthylène.

13. Liège naturel chimiquement modifié selon la revendication 1, **caractérisé en ce que** R est -COOEt.

14. Liège naturel chimiquement modifié selon la revendication 13, **caractérisé en ce que** les groupes chimiques de surface répondent à la formule :
A-NH-X-COOEt
dans laquelle A et X ont les significations susmentionnées.

15. Liège naturel chimiquement modifié selon la revendication 14, **caractérisé en ce que** X est un groupe alkylène, en particulier méthylène.

16. Liège naturel chimiquement modifié selon la revendication 1, **caractérisé en ce que** R est -NHR⁴.

17. Liège naturel chimiquement modifié selon la revendication 16, **caractérisé en ce que** les groupes chimiques de surface répondent à la formule :
A-NH-X-NHR⁴
dans laquelle A, X et R⁴ ont les significations susmentionnées.

18. Liège naturel chimiquement modifié selon la revendication 17, **caractérisé en ce que** X est un groupe alkylène, en particulier éthylène, et R⁴ est un groupe aryle, en particulier 1-naphtyle.

19. Liège naturel chimiquement modifié selon la revendication 17, **caractérisé en ce que** X est un groupe alkylène, en particulier éthylène, et R⁴ est un groupe chloroacétyle.

20. Liège naturel chimiquement modifié selon la revendication 16, **caractérisé en ce que** les groupes chimiques de surface répondent à la formule :
A-NH-NHR⁴
dans laquelle A et R⁴ ont les significations susmentionnées.

21. Liège naturel chimiquement modifié selon la revendication 20, **caractérisé en ce que** R⁴ est un groupe aryle, en particulier phényle.

22. Liège naturel chimiquement modifié selon la revendication 1, **caractérisé en ce que** R est -H.

23. Liège naturel chimiquement modifié selon la revendication 22, **caractérisé en ce que** les groupes chimiques de surface répondent à la formule :
A-NH-X-H
dans laquelle A et X ont les significations susmentionnées.

24. Liège naturel chimiquement modifié selon la revendication 23, **caractérisé en ce que** X est un groupe alkyle, en particulier 1-phényléthyle.

25. Liège naturel chimiquement modifié selon les revendications 1 à 24, **caractérisé en ce qu'**il contient entre 0,01 millimole et 10 millimoles de résidus fonctionnels par gramme de support.

26. Procédé pour obtenir un liège naturel chimiquement modifié, objet des revendications 1 à 25, **caractérisé en ce qu'**il comprend les étapes suivantes :
(a) activation des groupes réactifs du liège naturel par utilisation d'un agent d'acylation, d'halogénation ou de sulfonylation, et
(b) réaction des groupes activés avec un composé de formule générale (II) : 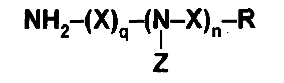
dans laquelle X, q, n, Z et R ont les significations susmentionnées.

27. Procédé selon la revendication 26, **caractérisé en ce que** l'agent d'acylation est le chlorure d'acétyle, l'agent d'halogénation est le chlorure de thionyle, et l'agent de sulfonylation est le chlorure de méthanesulfonyle.

28. Procédé selon la revendication 26 ou 27, **caractérisé en ce que**, avant le traitement avec l'étape d'activation, une étape préalable pour conditionner le matériau par des lavages aqueux à pH alcalin, acide et neutre est mise en oeuvre.

29. Liège naturel chimiquement modifié qui peut être produit par le procédé faisant l'objet des revendications 26 à 28.

30. Utilisation du liège naturel chimiquement modifié, selon les revendications 1 à 25 et 29, en tant que support pour des réactions chimiques et biochimiques sur phase solide.
